# DEMANDE DE BREVET EUROPEEN

(11) **EP 1 482 230 A1**
(43) Date de publication de la demande: **01.12.2004**
(21) Numéro de dépôt: 03011867.3
(22) Date de dépôt: 27.05.2003
(51) Int. Cl.: F16L 37/14

(54) **Connecteur circulaire**

(71) Demandeur: Antoine, Hubert, 4130 Esneux (BE)
(72) Inventeur: Antoine, Hubert, 4130 Esneux (BE)

(57) **Abrégé**

Un système de liaison de deux tubes (1 et 2), chacun muni d'une gorge (6,7), est obtenu en insérant par une ouverture latérale une cale de blocage souple (3) dans l'espace annulaire formé par les deux gorges (6,7) mises en vis à vis.

Un joint (4) assure l'étanchéité du montage.

## Description

L'invention concerne un système de connexion rapide de deux corps cylindriques soumis à une charge axiale ; par exemple deux tubes sous pression

L'assemblage de deux corps cylindriques soumis à une force de séparation est typique des raccords de tubes contenant un fluide sous pression.
Cet assemblage doit au moins pouvoir résister à la force axiale de séparation égale à la pression fois la section du tube.
Certains raccords démontables ont au moins une gorge circulaire aménagée dans un des tubes, dans laquelle viennent se loger des éléments de fermeture solidaires de l'autre tube :c'est par exemple le système bien répandu de connexion rapide pour l'air comprimé, où les éléments mobiles sont des billes : ces éléments mobiles de fermeture sont mus radialement pour verrouiller le raccord, à l'aide d'un mécanisme.
Dans d'autres solutions, il est prévu d'introduire l'élément mobile de blocage par un passage tangentiel aménagé dans le tube femelle, dans la gorge circulaire aménagée dans le tube mâle. Dans le brevet US4009896, l'élément mobile est une pince élastique solidaire du tube femelle et se glissant dans la gorge circulaire du tube mâle. Dans le brevet US6494495, l'élément mobile est un ou plusieurs goupilles introduits par un passage tangentiel dans la gorge circulaire. Dans le brevet RU2194905, c'est un anneau en matériau intelligent qui se positionne dans l'espace annulaire formé de deux gorges en vis à vis, l'une est sur le tube mâle, l'autre sur le tube femelle.
La capacité de charge de ces dispositifs est limitée par la portée de contact entre les goupilles et la gorge.

L'invention a pour but de fournir un système de connexion rapide et résistant à de grandes charges axiales, pour deux tubes ou parties d'un assemblage, emboîtés.

Conformément à l'invention, ce but est atteint de la façon suivante :
une gorge est aménagée dans chacun des deux tubes ; en emboîtant les tubes, les gorges se font face, et on y glisse un élément de blocage souple remplissant la cavité formée par les deux gorges. Cet élément est poussé par une ouverture latérale aménagée dans la gorge du tube femelle, et fait un tour complet dans la gorge : sa longueur de portée est celle de la circonférence du tube.
On répartit ainsi la charge sur toute la circonférence, ce qui permet de reprendre une charge élevée, et l'élément de blocage est introduit et retiré facilement par l'ouverture latérale, pour le montage et démontage de la connexion.

L'invention est décrite ci après à l'aide d'un exemple et de références aux dessins joints dans lesquels :
La figure 1 est une vue en coupe longitudinale représentant le système de connexion rapide.
La figure 2 est une vue transversale dans un plan traversant l'élément de blocage.

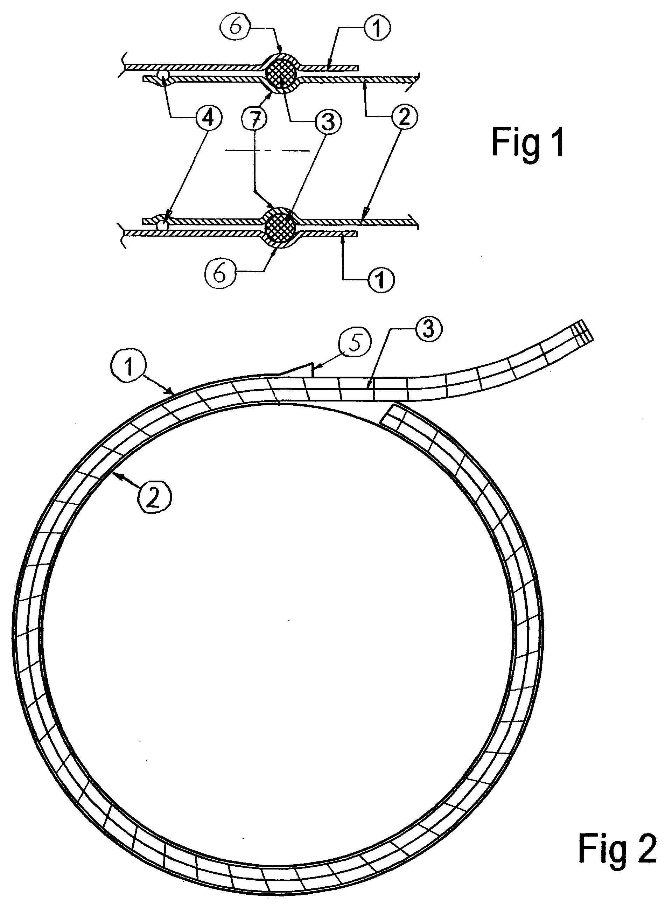

La figure 1 montre l'assemblage de deux tubes 1 et 2, dans lesquels sont formées deux gorges semi circulaires 6 et 7.
L'élément de blocage 3 se loge dans la gorge de section circulaire ainsi constituée. L'élément de blocage 3 est suffisamment souple pour suivre la courbure de la gorge.
Il est en outre possible d'assurer l'étanchéité de la connexion, par exemple par un joint souple 4 installé dans une gorge d'un des tubes, le tube 2 sur la figure.

La figure 2 montre l'élément de blocage 3 en position de blocage, avec une extrémité dépassant pour l'illustration par l'ouverture latérale 5 aménagée dans le fond de la gorge 6.

L'élément 3 est introduit par simple poussée dans l'ouverture tangentielle 5 et suit le chemin formé par les gorges 6 et 7.
Il doit donc être suffisamment souple dans le sens de la longueur, mais il doit être solide transversalement pour pouvoir résister en cisaillement à la charge de séparation des tubes.
L'élément de blocage sera par exemple constitué d'un chapelet de rouleaux cylindriques enfilés sur un câble, ou, si la charge n'est pas trop importante, par un simple câble métallique torsadé.

Le dispositif ainsi décrit peut s'appliquer à la liaison d'éléments emboîtés autres que circulaires et la section de l'élément de blocage peut être autre que circulaire, par exemple rectangulaire.

## Revendications

1. Assemblage solidarisant deux parties s'emboîtant l'une dans l'autre et chacune munie d'une gorge, avec un élément de blocage souple introduit dans l'espace formé par les gorges en vis à vis, par une ouverture latérale aménagée dans une des gorges.

2. Assemblage selon la revendication 1 où l'élément de blocage souple est formé d'une chaîne articulée de blocs résistant à la charge de séparation des deux parties.
